# EUROPEAN PATENT SPECIFICATION

(11) **EP 4 317 356 B1**
(45) Date of publication and mention of the grant of the patent: **09.09.2026**
(21) Application number: 23183680.0
(22) Date of filing: 05.07.2023
(51) Int. Cl.: C09K 5/06, C08J 3/075, C08L 29/04

(54) **A TYPE OF TRIPLE NETWORK COOLING HYDROGEL WITH HIGH COMPRESSIVE AND ELASTIC**
HYDROGEL MIT DREIFACHER NETZWERKKÜHLUNG MIT HOHER KOMPRESSION UND ELASTIK
TYPE D'HYDROGEL DE REFROIDISSEMENT À TRIPLE RÉSEAU AVEC COMPRESSION ET ÉLASTIQUE ÉLEVÉES

(30) Priority: 02.08.2022 CN 202210921230
(43) Date of publication of application: 07.02.2024
(73) Proprietor: Honeywell Safety Products USA, Inc., Wilmington, DE 19808 (US)
(72) Inventor: WANG, Yuyan, Charlotte 28202 (US); ZHOU, Tianqi, Charlotte 28202 (US); HOU, Zhixiong, Charlotte 28202 (US); LUO, Rui, Charlotte 28202 (US); LIN, Ling, Charlotte 28202 (US); GU, Zheng, Charlotte 28202 (US); ZHOU, Peng, Charlotte 28202 (US); LIU, Le, Charlotte 28202 (US); ZHAO, Qingyi, Charlotte 28202 (US); DUDELZAK, Marc, Charlotte 28202 (US)
(74) Representative: Haseltine Lake Kempner LLP

(56) References cited:
- CN-A- 113 174 237
- CN-B- 109 880 127
- YU KUNYANG ET AL: "Review on form-stable inorganic hydrated salt phase change materials: Preparation, characterization and effect on the thermophysical properties", APPLIED ENERGY, ELSEVIER SCIENCE PUBLISHERS, GB, vol. 292, 2 April 2021 (2021-04-02), XP086559122, ISSN: 0306-2619, [retrieved on 20210402], DOI: 10.1016/J.APENERGY.2021.116845
- COELHO ELIDIANE CARVALHO ET AL: "Poly(vinyl alcohol) and poly(dimethylsiloxane)-based interpenetrating polymer networks via radical polymerisation", JOURNAL OF POLYMER RESEARCH, SPRINGER NETHERLANDS, DORDRECHT, vol. 21, no. 9, 26 August 2014 (2014-08-26), pages 1 - 11, XP035386195, ISSN: 1022-9760, [retrieved on 20140826], DOI: 10.1007/S10965-014-0561-X
- WANG JING-HUI ET AL: "High-strength and tough composite hydrogels reinforced by the synergistic effect of nano-doping and triple-network structures", EUROPEAN POLYMER JOURNAL, PERGAMON PRESS LTD OXFORD, GB, vol. 142, 7 November 2020 (2020-11-07), XP086424362, ISSN: 0014-3057, [retrieved on 20201107], DOI: 10.1016/J.EURPOLYMJ.2020.110122

## Description

### TECHNICAL FIELD

The invention provides triple network cooling hydrogel compositions of high tensile strength, high compression, high elasticity, and long cooling period and methods of making the compositions.

### BACKGROUND OF THE INVENTION

Hydrogels are a class of hydrated polymeric materials with a three-dimensional network structure. Hydrogels reported in the art include polyvinyl alcohol (PVA) hydrogels (CN110016149A) and polydimethylsiloxane (PDMS) /PVA hydrogel composites (CN110016149A). Phase change materials (PCMs), as an energy storage technology, can store large amounts of energy in the form of latent heat during the phase change process. Reported in the art are composite materials of a PCM and PVA hydrogel (CN110746939B; CN101455856B) and of a paraffin wax PCM and a calcium alginate hydrogel (Jiao, X.D., et al. Ceramics - Silikaty 65 (4) 354-363 (2021). There is a need in the art for hydrogels with improved properties.

YU KUNYANG ET AL: "Review on form-stable inorganic hydrated salt phase change materials: Preparation, characterization and effect on the thermophysical properties", APPLIED ENERGY, ELSEVIER SCIENCE PUBLISHERS, GB, vol. 292, 2 April 2021 discloses that thermal energy storage based on inorganic hydrated salt phase change materials (PCMs) has attracted considerable attention due to the apparent advantages of high energy storage density, non-toxic, cost effective, etc. It is expected to improve the utilization efficiency of renewable energy and mitigate the energy crisis. Nevertheless, there are still some limitations including phase segregation, supercooling, low thermal conductivity and leakage, etc. For these reasons, stabilizing of PCMs is being developed as promising technique to overcome the obstacles.

### BRIEF SUMMARY OF THE CLAIMED INVENTION

The present invention is defined in the independent claims, to which reference should now be made. Advantageous features are set out in the sub claims. In one aspect, a triple crosslinked cooling hydrogel composition comprises about 4-8% w/w polyvinyl alcohol (PVA), about 4-8 % w/w polydimethylsiloxane (PDMS), about 15-25 % w/w phase change material (PCM), about 55-68% w/w water, and about 0.5-2.5% w/w crosslinker. In some triple crosslinked cooling hydrogel compositions, the PVA is PVA 1799. In some triple crosslinked cooling hydrogel compositions, the crosslinker is glutaraldehyde.

In some triple crosslinked cooling hydrogel compositions, the PCM is/comprises at least one of PCM 28, PCM 32, PCM 37, PCM 42, PCM 45, and PCM 52. In some triple crosslinked cooling hydrogel compositions, the PCM comprises at least two of PCM 28, PCM 32, PCM 37, PCM 42, PCM 45, and PCM 52. In some triple crosslinked cooling hydrogel compositions, the PCM comprises at least three of PCM 28, PCM 32, PCM 37, PCM 42, PCM 45, and PCM 52. In some triple crosslinked cooling hydrogel compositions, the PCM comprises at least four of PCM 28, PCM 32, PCM 37, PCM 42, PCM 45, and PCM 52. In some triple crosslinked cooling hydrogel compositions, the PCM comprises at least five of PCM 28, PCM 32, PCM 37, PCM 42, PCM 45, and PCM 52. In some triple crosslinked cooling hydrogel compositions, the PCM comprises PCM 28, PCM 32, PCM 37, PCM 42, PCM 45, and PCM 52.

Some triple crosslinked cooling hydrogel compositions further comprise vanillic acid.

Some triple crosslinked cooling hydrogel compositions comprise about 6.1% PVA 1799, about 57% w/w water, about 22% w/w PCM, about 5.4% w/w PDMS, about 0.87% w/w glutaraldehyde, and about 0.89% w/w vanillic acid. In some triple crosslinked cooling hydrogel compositions the PCM comprises PCM 28, PCM 32, PCM 37, PCM 42, PCM 45, and PCM 52.

Some triple crosslinked cooling hydrogel compositions comprise about 6.4% w/w PVA 1799, about 58% w/w water, about 21% w/w PCM, about 5.8% w/w PDMS, about 0.99% w/w glutaraldehyde, and about 0.68% w/w vanillic acid. In some triple crosslinked cooling hydrogel compositions, the PCM comprises PCM 28 and PCM 32.

Some triple crosslinked cooling hydrogel compositions comprise about 4.8% w/w PVA 1799, about 63% w/w water, about 19% w/w PCM, about 5.3% w/w PDMS, about 0.72% w/w glutaraldehyde, and about 0.85% w/w vanillic acid. In some triple crosslinked cooling hydrogel compositions, the PCM comprises PCM 28, PCM 32, PCM 42, and PCM 52.

Some triple crosslinked cooling hydrogel compositions comprise about 6.4% w/w PVA 1799, about 59% w/w water, about 19% w/w PCM, about 5.6% w/w PDMS, about 0.91% w/w glutaraldehyde, and about 0.92% w/w vanillic acid. In some triple crosslinked cooling hydrogel compositions, the PCM comprises PCM 28, PCM 32, PCM 37, PCM 42, and PCM 52.

Some triple crosslinked cooling hydrogel compositions comprise about 6.2% w/w PVA 1799, about 57% w/w water, about 22% w/w PCM, about 5.5% w/w PDMS, and about 2.1% w/w glutaraldehyde. In some triple crosslinked cooling hydrogel compositions, the PCM comprises PCM 28, PCM 32, PCM 37, PCM 42, PCM 45, and PCM 52.

Some triple crosslinked cooling hydrogel compositions comprise about 6.7% w/w PVA 1799, about 64% w/w water, about 18% w/w PCM, about 4.9% w/w PDMS, and about 1.7% w/w glutaraldehyde. In some triple crosslinked cooling hydrogel compositions, the PCM comprises PCM 32 and PCM 37.

In another aspect, the invention provides a method for making any of the triple crosslinked cooling hydrogels disclosed herein, comprising (a) adding PVA to water at about 95°C and performing stirring to produce a first crosslinked single network PVA hydrogel; (b) adding PDMS and a first curing agent to the first crosslinked single network PVA hydrogel at about 30°C and performing stirring, to produce a double network PVA + PDMS hydrogel; (c) increasing the temperature of the double network PVA + PDMS hydrogel to about 95°C at the rate of about 2°C/minute and performing stirring to produce a double network PVA + solidified PDMS hydrogel; (d) decreasing the temperature of the double network PVA + solidified PDMS hydrogel to about 85 °C and adding PCM performing stirring to produce a triple network PVA + PDMS + PCM hydrogel; (e) adding a crosslinking agent to the triple network PVA + PDMS + PCM hydrogel at about 85 °C to produce a stable triple network PVA + PDMS + PCM hydrogel; and (f) cooling the stable triple network PVA + PDMS + PCM hydrogel to room temperature to produce the triple network cooling hydrogel.

In some methods, the PCM is a PCM particle emulsion prepared by mixing PCM microcapsules and water. Some methods further comprise adding a second curing agent to the triple network PVA + PDMS + PCM hydrogel in step(e). In some methods, the second curing agent is vanillic acid. In some methods, the PVA is PVA 1799. In some methods, the first curing agent is pre-mixed with the PDMS. In some methods, the crosslinking agent is glutaraldehyde.

In some methods, the PCM is/comprises at least one of PCM 28, PCM 32, PCM 37, PCM 42, PCM 45, and PCM 52. In some methods, the PCM comprises at least two of PCM 28, PCM 32, PCM 37, PCM 42, PCM 45, and PCM 52. In some methods, the PCM comprises at least three of PCM 28, PCM 32, PCM 37, PCM 42, PCM 45, and PCM 52. In some methods, the PCM comprises at least four of PCM 28, PCM 32, PCM 37, PCM 42, PCM 45, and PCM 52. In some methods, the PCM comprises at least five of PCM 28, PCM 32, PCM 37, PCM 42, PCM 45, and PCM 52. In some methods, the PCM comprises PCM 28, PCM 32, PCM 37, PCM 42, PCM 45, and PCM 52.

In another aspect, the invention provides an article of clothing comprising any of the triple network cooling hydrogels disclosed herein. For example, the article of clothing can be a safety harness. The safety harness can comprise a padding. The padding can comprise any of the triple network cooling hydrogels disclosed herein.

### BRIEF DESCRIPTION OF THE DRAWINGS

Figure 1 is a schematic of the process for making a triple network cooling hydrogel of formula 0224.
Figure 2 depicts differential scanning calorimetry (DSC) analysis of a triple network cooling hydrogel crosslinked with 28°C /32°C PCM capsule particles.
Figure 3 depicts differential scanning calorimetry (DSC) analysis of a triple network cooling hydrogel crosslinked with 28°C /32°C /42°C/52°C PCM capsule particles.
Figure 4 depicts differential scanning calorimetry (DSC) analysis of a triple network cooling hydrogel crosslinked with 28°C /32°C /37°C/42°C/52°C PCM capsule particles.
Figures 5A, 5B, and 5C depict triple network cooling hydrogel microstructure of a hydrogel crosslinked with 28°C /32°C PCM capsule particles, analyzed by scanning electron microscopy (SEM), shown at decreasing magnifications, from Figure 5A to Figure 5B to Figure 5C. In Figure 5A, representative PCM particles are marked as 2-3 µm particles and representative PDMS particles are marked as 7-8 µm particles.
Figure 6 depicts results of tensile strength tests comparing triple network cooling hydrogel (crosslinked with 28°C /32°C /37°C/42°C/52°C PCM capsule particles) to normal hydrogel (PVA 1799 without PDMS or PCM).
Figure 7 depicts results of compression tests comparing triple network cooling hydrogel (crosslinked with 28°C /32°C /37°C/42°C/52°C PCM capsule particles) to normal hydrogel (PVA 1799 without PDMS or PCM).

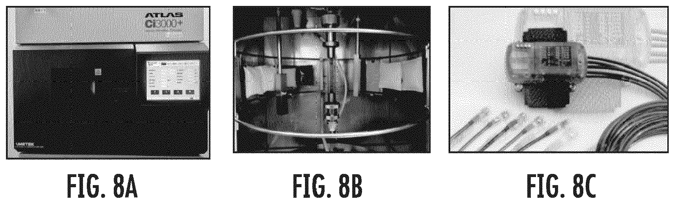

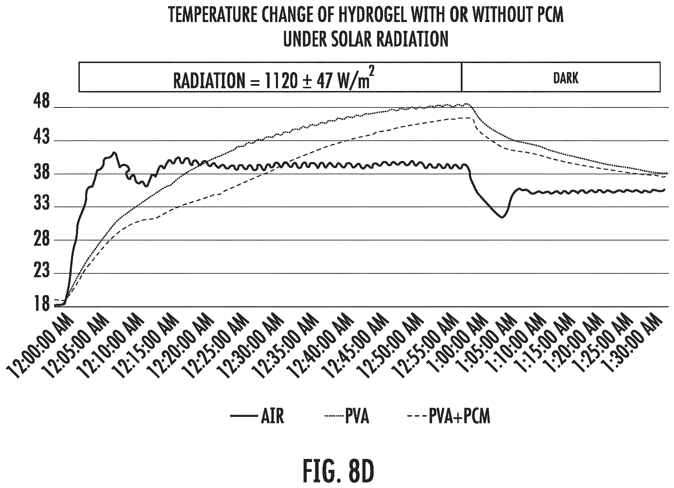

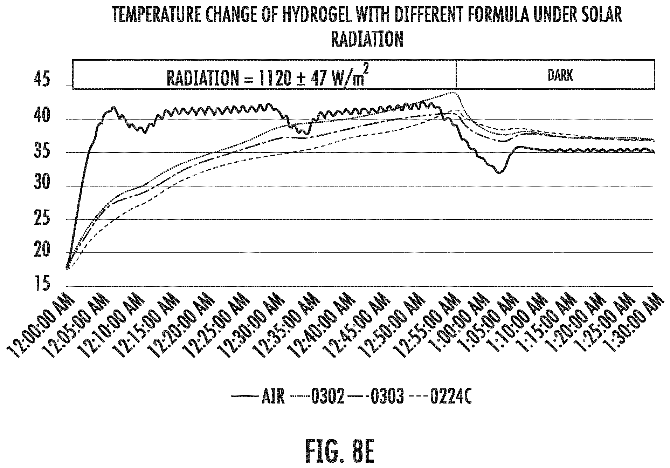

Figures 8A-8E depict results of experiments measuring hydrogel temperature when exposed to simulated solar radiation. Figure 8A-C depict equipment and material set-up for the studies. Figure 8A (left) is an image of the exterior of the ATLAS Ci3000+ Xenon Weather Ometer, Figure 8B (center) is an image of chamber of the ATLAS Ci3000+ Xenon Weather Ometer, and Figure 8C (right) is an image of MSR 147WD to record the real time temperature of the hydrogel padding. Figure 8D depicts temperature change of hydrogel with PCM (PVA/PCM-28 hydrogel, dashed curve) or without PCM (PVA hydrogel, dotted curve), and air (solid curve) under solar radiation. Figure 8E depicts temperature change of three hydrogels with different formulas: a PVA/PDMS/PCM-42, 45, 32, 37, 28, 52, hydrogel (0224C formula, dashed curve), a PVA/PDMS/PCM-32, 37 hydrogel (0303 formula, dot-dashed curve), and a PVA/PDMS [no PCM] (0302 formula, dotted curve) and air (solid curve) under solar radiation.
Figure 9 is a sketch of configuration of triple network cooling padding in shoulder of a safety harness:inlay cooling capsule (wide hatching); shoulder padding (narrow hatching).

### DEFINITIONS

A "cross -link" refers to a bond or short sequence of bonds that links one polymer chain to another. Exemplary cross-links are hydrogen bonds, Van der Waals interactions, and chemical bonds. A "crosslinker" refers to a chemical agent that induces chemical crosslinks between polymer chains. Exemplary crosslinkers used in a hydrogel system are glutaraldehyde, sodium borate, and boric acid.

A "curing agent" refers to a chemical additive that toughens or hardens a polymer material by cross-linking of polymer chains. Exemplary curing agents are vanillic acid and a curing agent supplied in a SYLGARD 184 silicone elastomer (Dow Corning), a two part liquid component kit of base and curing agent.

"PVA" refers to a polyvinyl alcohol. An exemplary PVA is PVA 1799 available commercially from Sinopharm Chemical Reagent Co. Ltd (Catalog No. 9002-89-5; Degree of alcoholysis: 98-99%).

"PDMS" refers to polydimethylsiloxane. An exemplary PDMS is SYLGARD 184 silicone elastomer (Dow Corning), available commercially as a two part liquid component kit of base and curing agent. SYLGARD 184 may be prepared by mixing 10 parts base to 1 part curing agent.

"PCM" refers to a phase change material. Exemplary PCM are multi-component PCM microcapsules comprising core material C18-21 alkane and shell material polyoxymethylene melamine urea, CAS:25036-13-9, available commercially from Xinneng Phase New Material Technology Co. Ltd. at phase change temperatures of 28°C, 32°C, 37°C, 42°C, 45°C, or 52°C.

A "hydrogel" refers to a crosslinked hydrophilic polymer that does not dissolve in water.

A "single network hydrogel" or "single crosslinked hydrogel" refers to a hydrogel comprising a single hydrophilic polymer.

A "double network hydrogel" or "double crosslinked hydrogel" refers to a hydrogel comprising two components to double crosslink.

A "triple network hydrogel" or "triple crosslinked hydrogel" refers to a hydrogel comprising three components to triple crosslink.

Compositions or methods "comprising" or "including" one or more recited elements may include other elements not specifically recited. For example, a composition that "comprises" or "includes" PVA may contain the PVA alone or in combination with other ingredients. When the disclosure refers to a feature comprising specified elements, the disclosure should alternatively be understood as referring to the feature consisting essentially of or consisting of the specified elements.

Designation of a range of values includes all integers within or defining the range, and all subranges defined by integers within the range.

Unless otherwise apparent from the context, the term "about" encompasses insubstantial variations, such as values within a standard margin of error of measurement (e.g., SEM) of a stated value.

Statistical significance means p≤0.05.

The singular forms of the articles "a," "an," and "the" include plural references unless the context clearly dictates otherwise. For example, the term "a PCM" or "at least one PCM" can include a plurality of PCM, including mixtures thereof.

"% w/w" refers to a percentage by weight.

### DETAILED DESCRIPTION

### 1. General

The invention provides triple network cooling hydrogel compositions of high tensile strength, high compression, high elasticity, and long cooling period and methods of making the compositions. The triple network cooling hydrogel comprises crosslinked PVA, PDMS, and PCM, wherein the composition comprises about 4-8% w/w PVA, about 55-68% w/w water, about 15-25% w/w PCM, about 4-8% w/w PDMS, and about 0.5-2.5% w/w crosslinker.

The first crosslinking is hydrogen bonds among the PVA molecular chains, the second crosslinking is van der Waals interactions built up by PDMS microspheres inserted into the PVA network, and the PCM capsule particles act as the third crosslinking agent, which embed into the PVA + PDMS system to strengthen the network. The crosslinking agent glutaraldehyde reacts with the PVA by aldolization to form a stable triple network cooling hydrogel. Vanillic acid speeds up the aldolization reaction. Compared with single crosslinked and double crosslinked PVA hydrogel, as shown in Examples 6-7, the triple network hydrogel has excellent elastic and tensile strength with cooling function in high temperature environments.

A traditional PVA hydrogel is cross linked by hydrogen bond reaction, which is not stable and makes a hydrogel with low strength and compression. The invention modifies the single network hydrogel into triple network with PDMS as the second crosslinking function and PCM as the third crosslinking function. The triple network hydrogel is more robust and durable than art hydrogels, has high elasticity, and keeps its original shape after heavy pressure, as well has having a longer cooling period, which extends the applications for the hydrogel.

Traditional PVA hydrogels (single network hydrogel, single crosslinking) used in medical or consumer applications are disposable, easily fragile, and have low compression and tensile strength. In contrast, the triple network cooling hydrogel has robust tensile strength, high compression, and high elasticity. The multi-component phase change material (PCM) particles in the triple network cooling hydrogel provide not only cooling function but also act as the third crosslinking. The PDMS particles in the triple network cooling hydrogel provide highly durable shape and elasticity, and also act as the second crosslinking. The high water content in the triple network cooling hydrogel provides a longer cooling period because of the high specific heat capacity of the water. The triple network cooling hydrogel can be used in industrial, medical, and consumer products for cooling and calming. The triple network cooling hydrogel is useful in products for individuals who work for extended periods in hot sun, under conditions of high solar radiation and/or high temperature. The triple network hydrogel with its durable shape, robust strength, and compression with a long cooling effect provides cooling for individuals in high temperature environments and can be re-used for many years under harsh conditions.

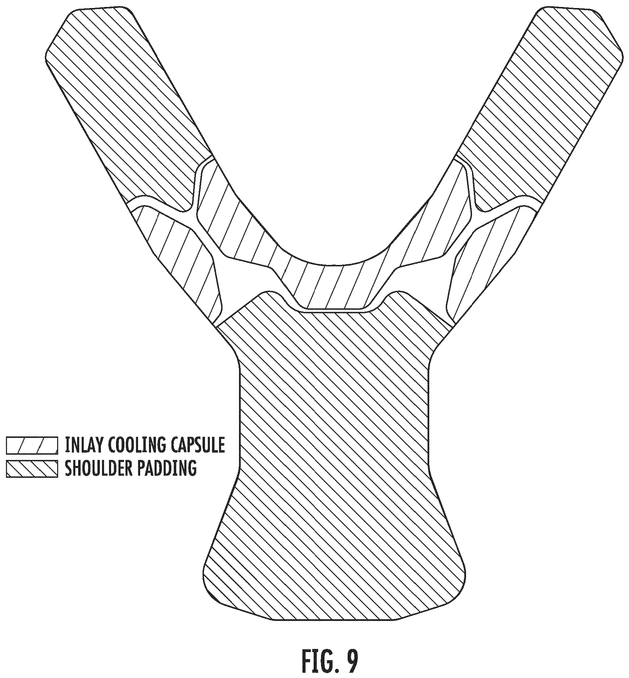

Compositions of the invention useful in providing cooling and/or compression to individuals in high solar radiation and/or high temperature environments. In an example, the individual is a utility worker, construction worker, or general industrial worker. The triple network cooling hydrogels may be used in protective article of clothing, for example a safety harness, a safety helmet, or a safety shoe. An exemplary use is in a utility harness, for example a Honeywell Miller H700 Utility Harness (Honeywell Industrial Safety, Fort Mill, SC, USA). Some safety harnesses comprise a triple network cooling hydrogel as accessory cooling padding, for example in the padding of the shoulder, waist, or leg portion of the harness. An exemplary configuration of triple network cooling hydrogel in a safety harness shoulder padding is shown in Figure 9. A safety helmet may comprise the triple network cooling hydrogel in a helmet band or helmet suspension. A safety shoe may comprise the triple network cooling hydrogel in a safety shoe insole. Other exemplary uses are in calming products such as a fever cooling patch, wound cooling patch, and ice patch to place on skin to cool down the temperature around the tissue. Other exemplary uses are in consumer products (e.g., clothing, hats, vests, shoes) to provide cooling to individuals in high solar radiation environments and/or high temperature environments. Exemplary uses are in consumer products such as an ice patch affixed in clothing, a hat, or a backpack by Velcro to cool an area of the body. Other exemplary uses are in medical products (e.g., clothing, blankets, hats, vests) to provide cooling to individuals with a fever or with swelling of tissue, for example an ice bag used in healthcare to cold compress swollen tissue or a fever patch to cold compress forehead and armpits of an individual with a fever.

Compositions of the invention may be packaged in a capsule to prevent loss of water from the compositions during use. An exemplary capsule is sealed by polyvinyl chloride (PVC)/polyurethane (PU)/thermoplastic polyurethane (TPU)/polyvinyl chloride (PVC) bonded with fabric. Compositions may be packaged in PVC/PU/TPU film or PVC/PU/TPU coating bonded with fabric composite by ultrasonic welding or high frequency welding to prevent loss of water..

### 2. Methods of preparing the triple network cooling hydrogel

A triple network cooling hydrogel of the invention comprises components as shown in Table 1.

**Table 1: Composition of triple network cooling hydrogel**

| Component | % by Weight |
|---|---|
| PVA | 4-8% |
| Water | 55-68% |
| PCM | 15-25% |
| PDMS | 4-8% |
| Crosslinker | 0.5-2.5% |

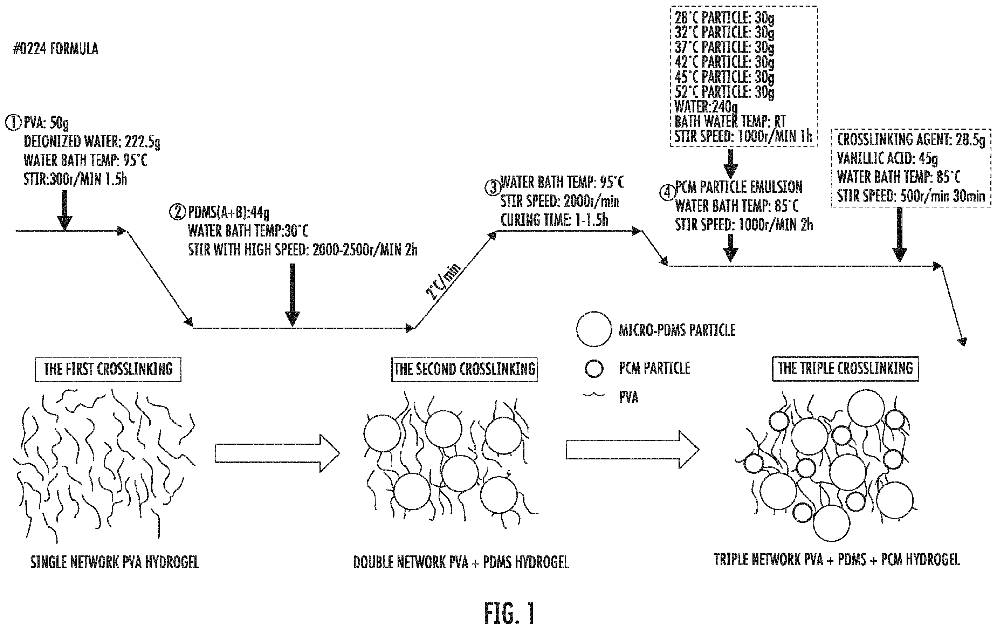

The compositions are prepared by mixing PVA with water at about 95°C with stirring (for example at about 300 revolutions per minute) to produce a single network PVA hydrogel. This step is referred to as the first crosslinking (see Figure 1). In the single network PVA hydrogel, the PVA molecular chains are crosslinked by hydrogen bonds.

The temperature is reduced to about 30°C, and PDMS, pre-mixed with a curing agent (for example, SYLGARD 184 silicone elastomer (Dow Corning) kit), is mixed with the single network PVA hydrogel and stirred at high speed (for example about 2000-2500 revolutions per minute) to produce a double network PVA + PDMS hydrogel. This step is referred to as the second crosslinking (see Figure 1). In the double network PVA + PDMS hydrogel, the PDMS microspheres are crosslinked with PVA long chain molecules by van der Waals interactions.

The temperature is increased to about 95°C at the rate of about 2°C per minute, with stirring, to solidify the PDMS microspheres in the double network PVA + PDMS hydrogel by action of a first curing agent that had been pre-mixed into the PDMS prior to adding to the single network PVA hydrogel, to produce a double network PVA + solidified PDMS hydrogel.

The temperature is reduced to about 85°C , and a PCM emulsion comprised of PCM particles and water is added to the double network PVA + solidified PDMS hydrogel with stirring to prepare a triple network PVA +PDMS + PCM hydrogel. The PCM capsule particles act as the third crosslinking agent, and embed into the existing double network PVA + solidified PDMS hydrogel to strengthen the network, producing a triple network PVA +PDMS + PCM hydrogel.. This step is referred to as the third crosslinking (see Figure 1).

A crosslinking agent (for example, glutaraldehyde) and optionally, a second curing agent (for example vanillic acid), are added to the triple network PVA +PDMS + PCM hydrogel at about 85°C, with stirring. The crosslinking agent reacts with the PVA by aldolization to fix the hydrogen bonds made in the first crosslinking and build up stable chemical bonds and the second curing agent accelerates the aldolization reaction, resulting in a stable triple network PVA +PDMS + PCM hydrogel.

The stable triple network PVA +PDMS + PCM hydrogel is cooled to room temperature to yield the triple network cooling hydrogel.

### 3. Exemplary triple network cooling hydrogel compositions

The compositions comprise PVA at a percentage by weight of about 4-8%, water at a percentage by weight of about 55-68%, PCM at a percentage by weight of about 15-25%, PDMS at a percentage by weight of about 4-8%, and crosslinker at a percentage by weight of about 0.5-2.5%.

The compositions include a PVA, for example PVA 1799. PVA can be present at a percentage by weight within the range from about 4-8%, 4.0-4.5%, 4.5-5.0%, 5.0-5.5%, 5.5-6.0%, 6.0-6.5%, 6.5-7.0%, 7.0%-7.5% or 7.5%-8.0%. PVA can be present at a percentage by weight of about 4.0%, 4.5%, 5.0%, 5.5%, 6.0%, 6.5%, 7.0%, 7.5%, or 8.0%. PVA can be present at a percentage by weight of about 4.8%, 6.1%, 6.2%, 6.4%, or 6.7%. For example the PVA can be present at a percentage by weight of 4.8%, 6.1%, 6.2%, 6.4%, or 6.7%.

The compositions include a PDMS, for example PDMS from a SYLGARD 184 silicone elastomer (Dow Corning) kit. PDMS can be present at a percentage by weight within the range from about 4-8%, 4.0-4.5%, 4.5-5.0%, 5.0-5.5%, 5.5-6.0%, 6.0-6.5%, 6.5-7.0%, 7.0%-7.5% or 7.5%-8.0%. PDMS can be present at a percentage by weight of about 4.0%, 4.5%, 5.0%, 5.5%, 6.0%, 6.5%, 7.0%, 7.5%, or 8.0%. PDMS can be present at about 4.9%, 5.3%, 5.4%, 5.5%, 5.6%,or 5.8%. For example, the PDMS can be present at 4.9%, 5.3%, 5.4%, 5.5%, 5.6%,or 5.8%.

The compositions include a PCM, for example prepared from a multi-component PCM microcapsule comprising core material C18-21 alkane and shell material polyoxymethylene melamine urea, CAS:25036-13-9, at phase change temperatures of 28°C, 32°C, 37°C, 42°C, 45°C, or 52°C (Xinneng Phase New Material Technology Co. Ltd.). PCM as used in the methods herein is prepared, for example, from a multi-component PCM microcapsule comprising core material C18-21 alkane and shell material polyoxymethylene melamine urea, CAS:25036-13-9, at phase change temperatures of 28°C, 32°C, 37°C, 42°C, 45°C, or 52°C (Xinneng Phase New Material Technology Co. Ltd.). In some embodiments, multi-component PCM microcapsules are mixed with water and incubated at room temperature with stirring to prepare a PCM particle emulsion. PCM can be present in the compositions of the invention at a percentage by weight within the range from about 15-25%, 15-16%, 16-17%, 17-18%, 18-19%, 19-20%, 20-21%, 21-22%, 22-23%, 23-24%, or 24-25%. The PCM can be present at a percentage by weight of about 15%, 16%, 17%, 18%, 19%, 20%, 21%, 22%, 23%, 24%, or 25%. For example, the PCM can be present at a percentage by weight of 18%, 19%, 21%, or 22%.

The compositions include water. Water can be present at a percentage by weight within the range from about 55-68%, 55-56%, 56-57%, 57-58%, 58-59%, 59-60%, 60-61%, 61-62%, 62-63%, 63-64%, 64-65%, 65-66%, 66-67%, or 67-68%. Water can be present at a percentage by weight of about 55%, 56%, 57%, 58%, 59%, 60%, 61%, 62%, 63%, 64%, 65%, 66%, 67%, or 68%. For example, water can be present at a percentage of 57%, 58%, 59%, 63%, or 64%.

The compositions include crosslinker, for example glutaraldehyde. Crosslinker can be present at a percentage by weight within the range from about 0.5-2.5%, 0.5-1.0%, 1.0-1.5%, 1.5-2.0%, or 2.0-2.5%. Crosslinker can be present at a percentage by weight of about 0.5%, 1.0%, 1.5%, 2.0%, or 2.5%. Crosslinker can be present at a percentage by weight of about 0.72%, 0.87%, 0.91%, 0.99%, 1.7%, or 2.1%. For example, crosslinker can be present at a percentage by weight of 0.72%, 0.87%, 0.91%, 0.99%, 1.7%, or 2.1%.

Vanillic acid can be present at a percentage by weight of about 0.68%, 0.85%, 0.89%, or 0.92%. For example, vanillic acid can be present at 0.68%, 0.85%, 0.89%, or 0.92%.

**Table 2: Formula 0224**

| Component | Weight | % by Weight (total 810 g) |
|---|---|---|
| PVA 1799 | 50g | 6.1% |
| water | 462.5g | 57% |
| PCM 42 particle | 30g | Total PCM 22% |
| PCM 45 particle | 30g | |
| PCM 32 particle | 30g | |
| PCM 37 particle | 30g | |
| PCM 28 particle | 30g | |
| PCM 52 particle | 30g | |
| PDMS Dow Corning 184(10:1) | 44g (10:1) | 5.4% |
| 25% glutaraldehyde | 28.5g | 0.87% |
| 16% Vanillic acid | 45g | 0.89% |

**Table 3: Formula of triple network cooling hydrogel crosslinked with 28°C /32°C PCM capsule particles**

| **Component** | **Weight** | **% by Weight (total 188.5 g)** |
|---|---|---|
| PVA 1799 | 12g | 6.4% |
| water | 50g(PVA solution) + 60g(PCM emulsion) | 58% |
| PCM 28 particle | 20g | Total PCM: 21% |
| PCM 32 particle | 20g | |
| PDMS Dow Corning 184(10:1) | 11g (10:1) | 5.8% |
| 25% Glutaraldehyde | 7.5g | 0.99% |
| 16% Vanillic acid | 8g | 0.68% |

**Table 4:. Formula of triple network cooling hydrogel crosslinked with 28°C /32°C /42°C/52°C PCM capsule particles**

| **Component** | **weight** | **% by Weight (total 416 g)** |
|---|---|---|
| PVA 1799 | 20g | 4.8% |
| water | 100g (PVA solution) +160g (PCM emulsion) | 63% |
| PCM 52 particle | 20g | Total PCM 19% |
| PCM 42 particle | 20g | |
| PCM 32 particle | 20g | |
| PCM 28 particle | 20g | |
| PDMS Dow Corning 184(10:1) | 22g (10:1) | 5.3% |
| 16% Vanillic acid | 22g | 0.85% |
| 25% Glutaraldehyde | 12g | 0.72% |

**Table 5: . Formula of triple network cooling hydrogel crosslinked with 28°C /32°C /37°C/42°C/52°C PCM capsule particles**

| **Component** | **weight** | **% by Weight (total 780 g)** |
|---|---|---|
| PVA 1799 | 50g | 6.4% |
| water | 222.5g(PVA solution) + 240g (in PCM emulsion) | 59% |
| PCM 52 particle | 30g | Total PCM 19% |
| PCM 42 particle | 30g | |
| PCM 37 particle | 30g | |
| PCM 32 particle | 30g | |
| PCM 28 particle | 30g | |
| PDMS Dow Corning 184(10:1) | 44 g (10:1) | 5.6% |
| 16% Vanillic acid | 45g | 0.92% |
| 25% Glutaraldehyde | 28.5g | 0.91% |

**Table 6: . Formula 0224C**

| Component | weight | % by Weight (total 804.5 g) |
|---|---|---|
| PVA 1799 | 50g | 6.2% |
| water | 462.5g | 57% |
| PCM 42 particle | 30g | Total PCM 22% |
| PCM 45 particle | 30g | |
| PCM 32 particle | 30g | |
| PCM 37 particle | 30g | |
| PCM 28 particle | 30g | |
| PCM 52 particle | 30g | |
| PDMS Dow Corning 184(10:1) | 44g (10:1) | 5.5% |
| 25% glutaraldehyde | 68g | 2.1% |

**Table 7: Formula 0303**

| Component | weight | % by Weight (total 223 g) |
|---|---|---|
| PVA 1799 | 15g | 6.7% |
| water | 142g | 64% |
| PCM 32 particle | 20g | Total PCM 18% |
| PCM 37 particle | 20g | |
| PDMS Dow Corning 184(10:1) | 11g (10:1) | 4.9% |
| 25% glutaraldehyde | 15g | 1.7% |

### 4. Exemplary methods of preparing the triple network cooling hydrogel

Exemplary methods of preparing triple network cooling hydrogels of the invention are provided in Figure 1 and Example 1.

In some embodiments, the PDMS is packaged with a first curing agent and is mixed with the first curing agent prior to use in the method. In some embodiments, the crosslinking agent is glutaraldehyde. In some embodiments, the second curing agent is vanillic acid.

### 5. Phase change materials useful in the invention

Phase change materials useful in the invention include multi-component PCM microcapsules. Exemplary PCM microcapsules comprise a core material of C18-21 alkane and a shell material of polyoxymethylene melamine urea, CAS:25036-13-9.. PCM microcapsules are available in a range of phase change temperatures including, for example, 28°C/32°C/37°C/42°C/45°C/52°C. PCMs of specified phase change temperatures may be chosen for use in compositions of the invention for use in cooling in a range of temperature environments.

Some triple network cooling hydrogels of the invention comprise at least one PCM selected from the group consisting of a PCM of phase change temperature 28°C (also referred to as PCM 28, PCM 28 particle, 28°C particle), a PCM of phase change temperature 32°C (also referred to as PCM 32, PCM 32 particle, 32°C particle),, a PCM of phase change temperature 37°C (also referred to as PCM 37, PCM 37 particle, 37°C particle),, a PCM of phase change temperature 42°C (also referred to as PCM 42, PCM 42 particle, 42°C particle),, a PCM of phase change temperature 45°C (also referred to as PCM 45, PCM 45 particle, 45°C particle), and a PCM of phase change temperature 52°C (also referred to as PCM 52, PCM 52 particle, 52°C particle),. Some triple network cooling hydrogels comprise at least two PCM selected from the group consisting of a PCM of phase change temperature 28°C, a PCM of phase change temperature 32°C, a PCM of phase change temperature 37°C, a PCM of phase change temperature 42°C, a PCM of phase change temperature 45°C, and a PCM of phase change temperature 52°C. Some triple network cooling hydrogels comprise at least three PCM selected from the group consisting of a PCM of phase change temperature 28°C, a PCM of phase change temperature 32°C, a PCM of phase change temperature 37°C, a PCM of phase change temperature 42°C, a PCM of phase change temperature 45°C, and a PCM of phase change temperature 52°C. Some triple network cooling hydrogels comprise at least four PCM selected from the group consisting of a PCM of phase change temperature 28°C, a PCM of phase change temperature 32°C, a PCM of phase change temperature 37°C, a PCM of phase change temperature 42°C, a PCM of phase change temperature 45°C, and a PCM of phase change temperature 52°C. Some triple network cooling hydrogels comprise at least five PCM selected from the group consisting of a PCM of phase change temperature 28°C, a PCM of phase change temperature 32°C, a PCM of phase change temperature 37°C, a PCM of phase change temperature 42°C, a PCM of phase change temperature 45°C, and a PCM of phase change temperature 52°C. Some triple network cooling hydrogels comprise a PCM of phase change temperature 28°C, a PCM of phase change temperature 32°C, a PCM of phase change temperature 37°C, a PCM of phase change temperature 42°C, a PCM of phase change temperature 45°C, and a PCM of phase change temperature 52°C.

Some triple network cooling hydrogels of the invention comprise a PCM of phase change temperature 28°C and a PCM of phase change temperature 32°C. Some triple network cooling hydrogels of the invention comprise a PCM of phase change temperature 28°C and a PCM of phase change temperature 37°C. Some triple network cooling hydrogels of the invention comprise a PCM of phase change temperature 28°C and a PCM of phase change temperature 42°C. Some triple network cooling hydrogels of the invention comprise a PCM of phase change temperature 28°C and a PCM of phase change temperature 45°C. Some triple network cooling hydrogels of the invention comprise a PCM of phase change temperature 28°C and a PCM of phase change temperature 52°C.

Some triple network cooling hydrogels of the invention comprise a PCM of phase change temperature 32°C and a PCM of phase change temperature 37°C. Some triple network cooling hydrogels of the invention comprise a PCM of phase change temperature 32°C and a PCM of phase change temperature 42°C. Some triple network cooling hydrogels of the invention comprise a PCM of phase change temperature 32°C and a PCM of phase change temperature 45°C. Some triple network cooling hydrogels of the invention comprise a PCM of phase change temperature 32°C and a PCM of phase change temperature 52°C. Some triple network cooling hydrogels of the invention comprise a PCM of phase change temperature 37°C and a PCM of phase change temperature 42°C.

Some triple network cooling hydrogels of the invention comprise a PCM of phase change temperature 37°C and a PCM of phase change temperature 45°C. Some triple network cooling hydrogels of the invention comprise a PCM of phase change temperature 37°C and a PCM of phase change temperature 52°C. Some triple network cooling hydrogels of the invention comprise a PCM of phase change temperature 42°C and a PCM of phase change temperature 45°C. Some triple network cooling hydrogels of the invention comprise a PCM of phase change temperature 42°C and a PCM of phase change temperature 52°C. Some triple network cooling hydrogels of the invention comprise a PCM of phase change temperature 45°C and a PCM of phase change temperature 52°C.

Some triple network cooling hydrogels of the invention comprise a PCM of phase change temperature 28°C, a PCM of phase change temperature 32°C, and a PCM of phase change temperature 37°C. Some triple network cooling hydrogels of the invention comprise a PCM of phase change temperature 28°C, a PCM of phase change temperature 32°C, and a PCM of phase change temperature 42°C. Some triple network cooling hydrogels of the invention comprise a PCM of phase change temperature 28°C, a PCM of phase change temperature 32°C, and a PCM of phase change temperature 45°C. Some triple network cooling hydrogels of the invention comprise a PCM of phase change temperature 28°C, a PCM of phase change temperature 32°C, and a PCM of phase change temperature 52°C. Some triple network cooling hydrogels of the invention comprise a PCM of phase change temperature 28°C, a PCM of phase change temperature 37°C, and a PCM of phase change temperature 42°C.

Some triple network cooling hydrogels of the invention comprise a PCM of phase change temperature 28°C, a PCM of phase change temperature 37°C, and a PCM of phase change temperature 45°C. Some triple network cooling hydrogels of the invention comprise a PCM of phase change temperature 28°C, a PCM of phase change temperature 37°C, and a PCM of phase change temperature 52°C. Some triple network cooling hydrogels of the invention comprise a PCM of phase change temperature 28°C, a PCM of phase change temperature 42°C, and a PCM of phase change temperature 45°C. Some triple network cooling hydrogels of the invention comprise a PCM of phase change temperature 28°C, a PCM of phase change temperature 42°C, and a PCM of phase change temperature 52°C. Some triple network cooling hydrogels of the invention comprise a PCM of phase change temperature 28°C, a PCM of phase change temperature 45°C, and a PCM of phase change temperature 52°C.

Some triple network cooling hydrogels of the invention comprise a PCM of phase change temperature 42°C, a PCM of phase change temperature 45°C, and a PCM of phase change temperature 52°C. Some triple network cooling hydrogels of the invention comprise a PCM of phase change temperature 37°C, a PCM of phase change temperature 45°C, and a PCM of phase change temperature 52°C. Some triple network cooling hydrogels of the invention comprise a PCM of phase change temperature 37°C, a PCM of phase change temperature 42°C, and a PCM of phase change temperature 52°C. Some triple network cooling hydrogels of the invention comprise a PCM of phase change temperature 37°C, a PCM of phase change temperature 42°C, and a PCM of phase change temperature 45°C. Some triple network cooling hydrogels of the invention comprise a PCM of phase change temperature 32°C, a PCM of phase change temperature 45°C, and a PCM of phase change temperature 52°C.

Some triple network cooling hydrogels of the invention comprise a PCM of phase change temperature 32°C, a PCM of phase change temperature 42°C, and a PCM of phase change temperature 52°C. Some triple network cooling hydrogels of the invention comprise a PCM of phase change temperature 32°C, a PCM of phase change temperature 42°C, and a PCM of phase change temperature 45°C. Some triple network cooling hydrogels of the invention comprise a PCM of phase change temperature 32°C, a PCM of phase change temperature 37°C, and a PCM of phase change temperature 52°C. Some triple network cooling hydrogels of the invention comprise a PCM of phase change temperature 32°C, a PCM of phase change temperature 37°C, and a PCM of phase change temperature 45°C. Some triple network cooling hydrogels of the invention comprise a PCM of phase change temperature 32°C, a PCM of phase change temperature 37°C, and a PCM of phase change temperature 42°C.

Some triple network cooling hydrogels of the invention comprise a PCM of phase change temperature 37°C, a PCM of phase change temperature 42°C, a PCM of phase change temperature 45°C, and a PCM of phase change temperature 52°C. Some triple network cooling hydrogels of the invention comprise a PCM of phase change temperature 32°C, a PCM of phase change temperature 42°C, a PCM of phase change temperature 45°C, and a PCM of phase change temperature 52°C. Some triple network cooling hydrogels of the invention comprise a PCM of phase change temperature 32°C, a PCM of phase change temperature 37°C, a PCM of phase change temperature 45°C, and a PCM of phase change temperature 52°C. Some triple network cooling hydrogels of the invention comprise a PCM of phase change temperature 32°C, a PCM of phase change temperature 37°C, a PCM of phase change temperature 42°C, and a PCM of phase change temperature 52°C. Some triple network cooling hydrogels of the invention comprise a PCM of phase change temperature 32°C, a PCM of phase change temperature 37°C, a PCM of phase change temperature 42°C, and a PCM of phase change temperature 45°C.

Some triple network cooling hydrogels of the invention comprise a PCM of phase change temperature 28°C, a PCM of phase change temperature 42°C, a PCM of phase change temperature 45°C, and a PCM of phase change temperature 52°C. Some triple network cooling hydrogels of the invention comprise a PCM of phase change temperature 28°C, a PCM of phase change temperature 37°C, a PCM of phase change temperature 45°C, and a PCM of phase change temperature 52°C. Some triple network cooling hydrogels of the invention comprise a PCM of phase change temperature 28°C, a PCM of phase change temperature 37°C, a PCM of phase change temperature 42°C, and a PCM of phase change temperature 52°C. Some triple network cooling hydrogels of the invention comprise a PCM of phase change temperature 28°C, a PCM of phase change temperature 37°C, a PCM of phase change temperature 42°C, and a PCM of phase change temperature 45°C. Some triple network cooling hydrogels of the invention comprise a PCM of phase change temperature 28°C, a PCM of phase change temperature 32°C, a PCM of phase change temperature 45°C, and a PCM of phase change temperature 52°C.

Some triple network cooling hydrogels of the invention comprise a PCM of phase change temperature 28°C, a PCM of phase change temperature 32°C, a PCM of phase change temperature 42°C, and a PCM of phase change temperature 52°C. Some triple network cooling hydrogels of the invention comprise a PCM of phase change temperature 28°C, a PCM of phase change temperature 32°C, a PCM of phase change temperature 42°C, and a PCM of phase change temperature 45°C. Some triple network cooling hydrogels of the invention comprise a PCM of phase change temperature 28°C, a PCM of phase change temperature 32°C, a PCM of phase change temperature 37°C, and a PCM of phase change temperature 52°C. Some triple network cooling hydrogels of the invention comprise a PCM of phase change temperature 28°C, a PCM of phase change temperature 32°C, a PCM of phase change temperature 37°C, and a PCM of phase change temperature 45°C. Some triple network cooling hydrogels of the invention comprise a PCM of phase change temperature 28°C, a PCM of phase change temperature 32°C, a PCM of phase change temperature 37°C, and a PCM of phase change temperature 42°C.

Some triple network cooling hydrogels of the invention comprise a PCM of phase change temperature 32°C, a PCM of phase change temperature 37°C, a PCM of phase change temperature 42°C, a PCM of phase change temperature 45°C, and a PCM of phase change temperature 52°C. Some triple network cooling hydrogels of the invention comprise a PCM of phase change temperature 28°C, a PCM of phase change temperature 37°C, a PCM of phase change temperature 42°C, a PCM of phase change temperature 45°C, and a PCM of phase change temperature 52°C. Some triple network cooling hydrogels of the invention comprise a PCM of phase change temperature 28°C, a PCM of phase change temperature 32°C, a PCM of phase change temperature 42°C, a PCM of phase change temperature 45°C, and a PCM of phase change temperature 52°C. Some triple network cooling hydrogels of the invention comprise a PCM of phase change temperature 28°C, a PCM of phase change temperature 32°C, a PCM of phase change temperature 37°C, a PCM of phase change temperature 45°C, and a PCM of phase change temperature 52°C. Some triple network cooling hydrogels of the invention comprise a PCM of phase change temperature 28°C, a PCM of phase change temperature 32°C, a PCM of phase change temperature 37°C, a PCM of phase change temperature 42°C, and a PCM of phase change temperature 52°C. Some triple network cooling hydrogels of the invention comprise a PCM of phase change temperature 28°C, a PCM of phase change temperature 32°C, a PCM of phase change temperature 37°C, a PCM of phase change temperature 42°C, and a PCM of phase change temperature 45°C.

### 3. Properties of the triple network cooling hydrogel

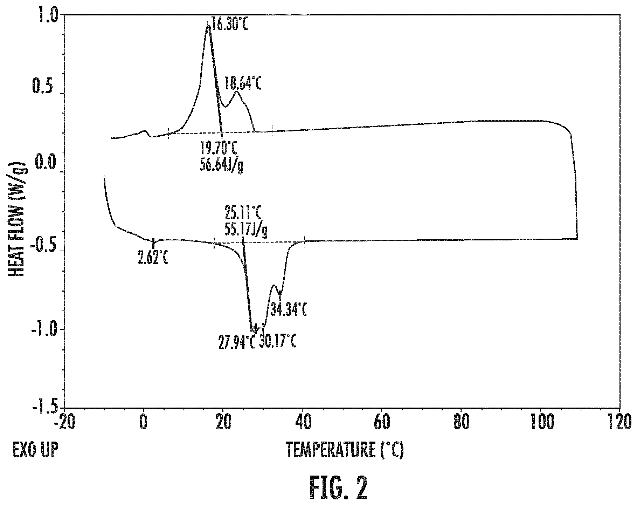

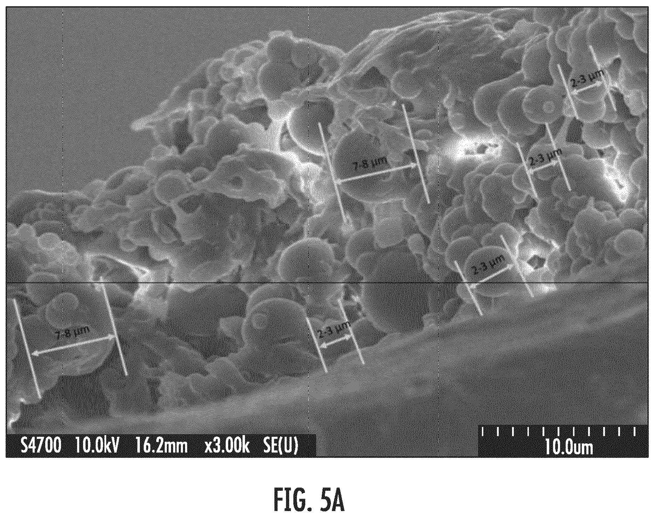

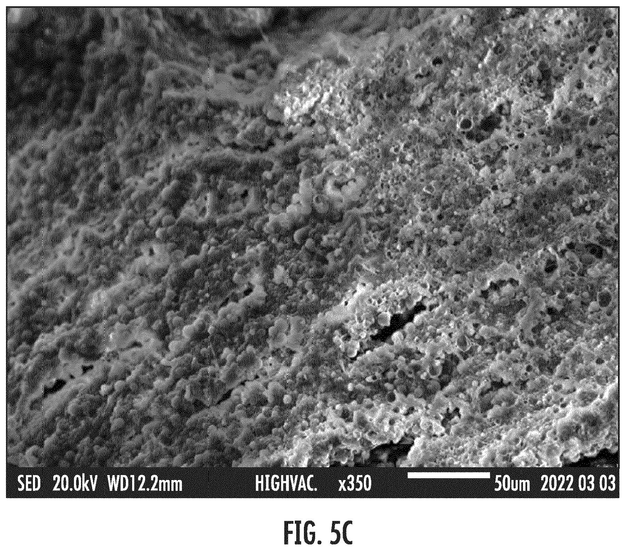

The scanning electron microscopy experiments as described in Example 5 and Figures 5A-C show the synthetic hydrogel structure has a triple network crosslinking. The differential scanning calorimetry experiments as described in Examples 2-4 and Figure 2-4 show that the phase change temperatures can be designed at varying temperature range conditions.

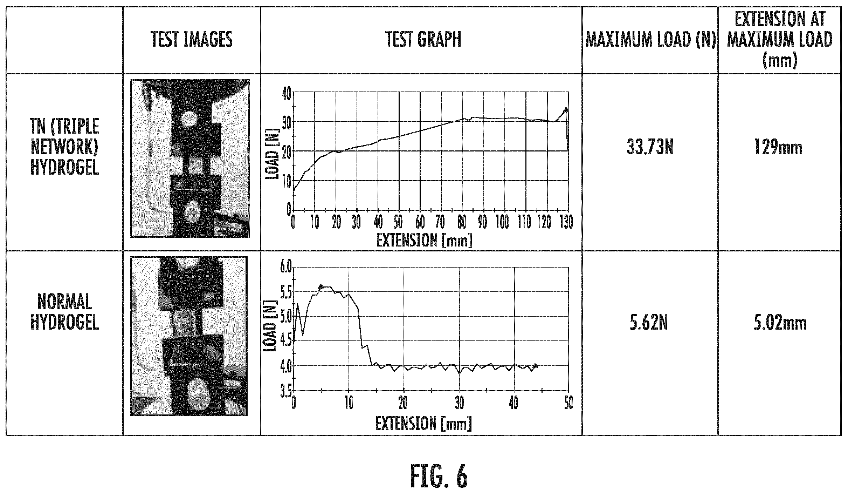

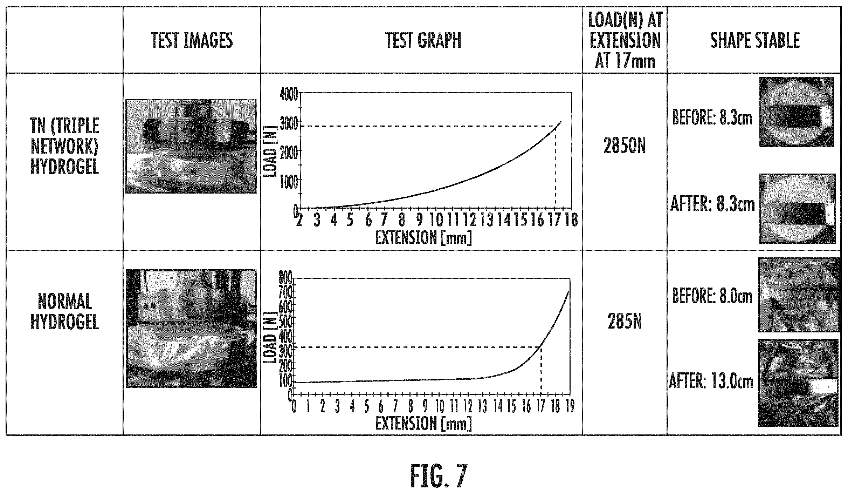

Tensile strength tests as described in Example 6 and Figure 6 show how the compositions of the invention provide 6-fold improved tensile strength over a single network PVA hydrogel and 25-fold improved elongation over a single network PVA hydrogel. The compression tests as described in Example 6 and Figure 7 show how compositions of the invention provide 10-fold more compression over a single network PVA hydrogel, and show that compositions of the invention have improved elasticity over a single network hydrogel. Compositions of the invention return to original size after compression unlike a single network PVA hydrogel which deformed after compression. The cooling period tests as described in Example 7 and Figures 8A-B which simulate solar radiation show how compositions of the invention have a lower temperature and provide improved cooling over double network PVA PDMS hydrogel without PCM.

Compositions of the invention may be re-used by reversing the phase change of the PCM in the triple network hydrogel by cooling to a lower temperature, for example about 4-6 °C, about 10°C - 20°C, or about 24°C for minutes or hours before subsequent use. Storage period at lower temperature depends on the weight of the triple network cooling hydrogel, the heavier the hydrogel, the higher the enthalpy, and the longer storage cycle time before re-use. Storage period at lower temperature also depends on proportion of PCM in the hydrogel system. The higher proportion of PCM, the higher enthalpy of phase change, and the longer storage cycle time before re-use. For triple network hydrogel cooling padding used in a utility harness, for example a Honeywell Miller H700 Utility Harness (Honeywell Industrial Safety, Fort Mill, SC, USA), comprising about 100 g triple network cooling hydrogel for each capsule, exemplary cooling periods storage cycle times are about 24°C for about one hour or 4°C-6°C for about 15-20 minutes. Triple network cooling hydrogel padding can be re-used after the storage cycle.

### EXAMPLES

### Example 1: Synthesis procedure for triple network hydrogels

1.Reagents:

**Table 8: Reagents**

| **Reagent** | **Supplier** |
|---|---|
| PVA 1799 | Sinopharm Chemical Reagent Co. Ltd. (Catalog No. XW90028956). |
| | CAS: 9002-89-5 |
| | Degree of alcoholysis : 98-99% |
| Vanillic acid | Sinopharm Chemical Reagent Co. Ltd. |
| | CAS: 121-34-6 |
| 25% Glutaraldehyde solution | Sinopharm Chemical Reagent Co. Ltd. |
| | CAS:111-30-8 |
| PCM microcapsule(multi-components) phase change temperature at 28°C/32°C/37°C/42°C/45°C/52°C | Xinneng Phase New Material Technology Co. Ltd. |
| PDMS SYLGARD 184 Silicone Elastomer (two part kit, 10 to 1 mix ratio of base and curing agent) | Dow Corning |

### 2. Preparation of PCM emulsion

In an example, the PCM particle emulsion was prepared by mixing 30 g PCM-28 microcapsules, 30 g PCM-32 microcapsules, 30g PCM-42 microcapsules, 30 g PCM 45 microcapsules, and 30 g PCM 52 microcapsules with 240 g water in a room temperature water bath and stirred at 1000 revolutions/minute (IKA RW20DZM stirrer) for 1 hr.

### 3. Preparation of 16% vanillic acid

Deionized water is added to vanillic acid to prepare 16% (w/w) vanillic acid.

### 4.Preparation procedure

The triple network cooling hydrogel was prepared by the following steps:
1) PVA1799 was added into the deionized water (see Examples 2-7 for exemplary amounts) in a 95°C water bath and stirred at 300 revolutions/minute (IKA RW20DZM stirrer) for 1.5 hours till the PVA1799 was totally dissolved.
2) The water bath temperature was reduced to 30°C, and pre-prepared PDMS solvent and curing agent (A+B) were added (see Examples 2-7 for exemplary amounts), and stirred at high speed 2000-2500 revolutions/minute (IKA RW20DZM stirrer) for 2 hours.
3) The temperature was increased to 95°C at the rate of 2°C/minute to solidify the PDMS microspheres at stir speed of 2000 revolutions/minute (IKA RW20DZM stirrer) for 1-1.5 hours.
4) The water bath temperature was reduced to 85°C, and pre-prepared PCM emulsion (see Example 1, part 2, for exemplary amounts for an emulsion of PCM-28 microcapsules, PCM-32 microcapsules, PCM-42 microcapsules, PCM 45 microcapsules, and PCM 52 microcapsules) was added and stirred at stir speed 1000 revolutions/minute (IKA RW20DZM stirrer) for 2 hours.
5) Crosslinking agent glutaraldehyde (see Examples 2-7 for exemplary amounts) was added to react with the PVA at 85°C, and optionally vanillic acid (see Examples 2-7 for exemplary amounts) was added dropwise, and the mixture stirred at stir speed 500 revolutions/minute (IKA RW20DZM stirrer) for 30 minutes.
6) The temperature was reduced to room temperature to obtain the triple network cooling hydrogel.

### Example 2: Preparation of triple network cooling hydrogel crosslinked with 28°C /32°C PCM capsule particles and DSC Analysis

Triple network cooling hydrogel crosslinked with 28°C /32°C PCM capsule particles was prepared with composition as in Table 9.

**Table 9: Composition of triple network cooling hydrogel crosslinked with 28°C /32°C PCM capsule particles**

| **Component** | **Weight** | **% by Weight (total 188.5 g)** |
|---|---|---|
| PVA 1799 | 12g | 6.4% |
| water | 50g(PVA solution) + 60g(PCM emulsion) | 58% |
| PCM 28 particle | 20g | Total PCM: 21% |
| PCM 32 particle | 20g | |
| PDMS Dow Corning 184(10:1) | 11g (10:1) | 5.8% |
| 25% Glutaraldehyde | 7.5g | 0.99% |
| 16% Vanillic acid | 8g | 0.68% |

Triple network cooling hydrogel crosslinked with 28°C /32°C PCM capsule particles was analyzed by differential scanning calorimetry (DSC) using a TA Instruments Q20. Results are depicted in Figure 2. The curve in the bottom of Figure 2 demonstrates the endothermic process with the two peaks of phase change melting at 27.94°C and 34.34°C, responding with the composite phase change capsule at the phase change temperature of 28°C and 32°C.

### Example 3: Preparation of triple network cooling hydrogel crosslinked with 28°C /32°C /42°C/52°C PCM capsule particles and DSC Analysis

Triple network cooling hydrogel crosslinked with 28°C /32°C /42°C/52°C PCM capsule particles was prepared with composition as in Table 10.

**Table 10: Composition of triple network cooling hydrogel crosslinked with 28°C /32°C /42°C/52°C PCM capsule particles**

| **Component** | **weight** | **% by Weight (total 416 g)** |
|---|---|---|
| PVA 1799 | 20g | 4.8% |
| water | 100g (PVA solution) +160g (PCM emulsion) | 63% |
| PCM 52 particle | 20g | Total PCM 19% |
| PCM 42 particle | 20g | |
| PCM 32 particle | 20g | |
| PCM 28 particle | 20g | |
| PDMS Dow Corning 184(10:1) | 22g (10:1) | 5.3% |
| 16% Vanillic acid | 22g | 0.85% |
| 25% Glutaraldehyde | 12g | 0.72% |

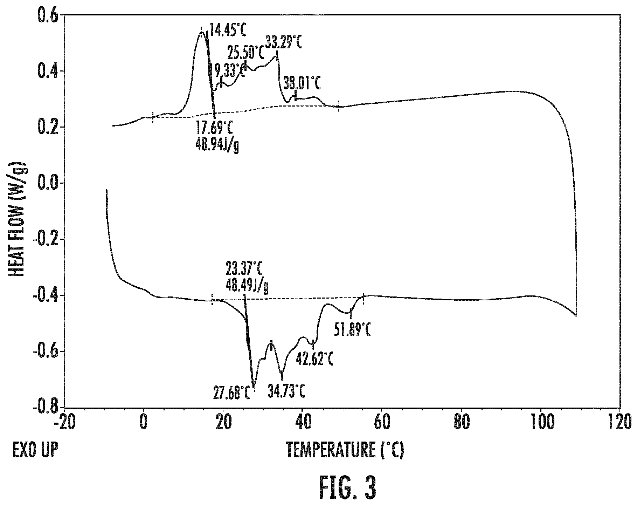

Triple network cooling hydrogel crosslinked with 28°C /32°C /42°C/52°C PCM capsule particles was analyzed by differential scanning calorimetry (DSC) using a TA Instruments Q20. Results are depicted in Figure 3. The curve in the bottom of Figure 3 demonstrates the endothermic process with the four peaks of phase change melting at 27.6°C /34.73°C/42.62°C/51.89°C, responding with the composite phase change capsule at the phase change temperature of 28°C /32°C/42°C/52°C.

### Example 4: Preparation of triple network cooling hydrogel crosslinked with 28°C /32°C /37°C/42°C/52°C PCM capsule particles and DSC Analysis

Triple network cooling hydrogel crosslinked with 28°C /32°C /37°C/42°C/52°C PCM capsule particles was prepared with composition as in Table 11.

**Table 11: Composition of triple network cooling hydrogel crosslinked with 28°C /32°C /37°C/42°C/52°C PCM capsule particles**

| **Component** | **weight** | **% by Weight (total 780 g)** |
|---|---|---|
| PVA 1799 | 50g | 6.4% |
| water | 222.5g(PVA solution) + 240g (in PCM emulsion) | 59% |
| PCM 52 particle | 30g | Total PCM 19% |
| PCM 42 particle | 30g | |
| PCM 37 particle | 30g | |
| PCM 32 particle | 30g | |
| PCM 28 particle | 30g | |
| PDMS Dow Corning 184(10:1) | 44 g (10:1) | 5.6% |
| 16% Vanillic acid | 45g | 0.92% |
| 25% Glutaraldehyde | 28.5g | 0.91% |

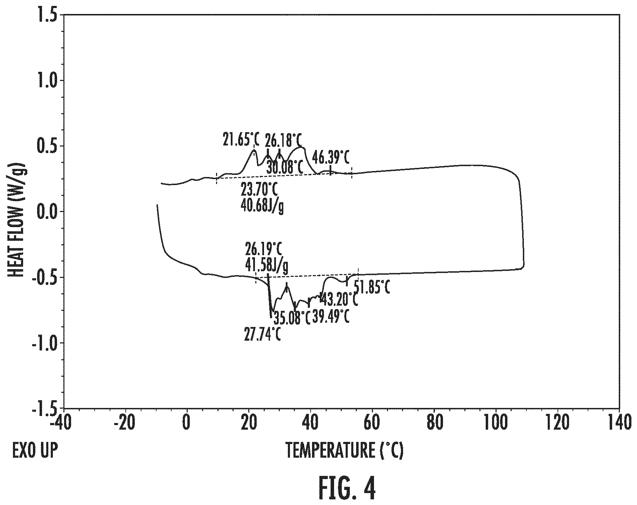

triple network cooling hydrogel crosslinked with 28°C /32°C /37°C/42°C/52°C PCM capsule particles was analyzed by differential scanning calorimetry (DSC) using a TA Instruments Q20. Results are depicted in Figure 4.

The curve in the bottom of Figure 4 demonstrates the endothermic process with the five peaks of phase change melting at 27.74°C /35.08°C/39.49°C/43.30°C/51.85°C, responding with the composite phase change capsule at the phase change temperature of 28°C /32°C/37°C/42°C/52°C.

### Example 5: Scanning Electron Microscopy of a triple network cooling hydrogel crosslinked with 28°C /32°C PCM capsule particles

**Table 12: Specimen formula**

| **Component** | **Weight** | **% by Weight (total 188.5 g)** |
|---|---|---|
| PVA 1799 | 12g | 6.4% |
| water | 50g(PVA solution) + 60g(PCM emulsion) | 58% |
| PCM 28 particle | 20g | Total PCM: 21% |
| PCM 32 particle | 20g | |
| PDMS Dow Corning 184(10:1) | 11g (10:1) | 5.8% |
| 25% Glutaraldehyde | 7.5g | 0.99% |
| 16% Vanillic acid | 8g | 0.68% |

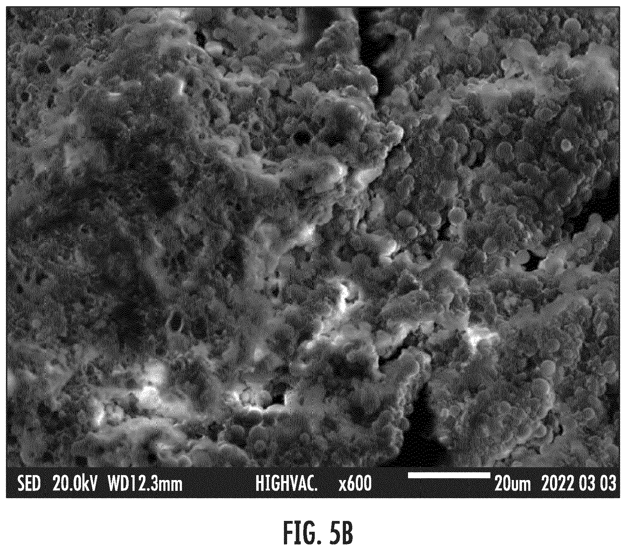

Figures 5A-C depict scanning electron microscopy (SEM) of triple network cooling hydrogel crosslinked with 28°C /32°C PCM capsule particles, using a Hitachi S4700 scanning electron microscope. Figures 5A-C demonstrate the crosslink microstructure. The microspheres in Figure 5A with size of 7- 8µm are the solidified PDMS microspheres, and the microspheres in Figure 5A with the size of 2-3 µm are the phase change capsules. Figure 5B-C demonstrate that phase change capsules microspheres take a greater proportion in the hydrogel system.

### Example 6: Tensile strength and compression tests on triple network cooling hydrogel crosslinked with 28°C /32°C /37°C/42°C/52°C PCM capsule particles

Tensile strength and compression tests were performed on triple network cooling hydrogel crosslinked with 28°C /32°C /37°C/42°C/52°C PCM capsule particles(Table 13) and on commercial normal hydrogel (PVA 1799 crosslinked with glutaraldehyde, without PDMS or PCM) obtained from Shanghai Chuangshi Medical technology (Group) Co., Ltd.

**Table 13: Hydrogel specimen formula:**

| **Component** | **weight** | **% by Weight (total 780 g)** |
|---|---|---|
| PVA 1799 | 50g | 6.4% |
| water | 222.5g(PVA solution) + 240g (in PCM emulsion) | 59% |
| PCM 52 particle | 30g | Total PCM 19% |
| PCM 42 particle | 30g | |
| PCM 37 particle | 30g | |
| PCM 32 particle | 30g | |
| PCM 28 particle | 30g | |
| PDMS Dow Corning 184(10:1) | 44 g (10:1) | 5.6% |
| 16% Vanillic acid | 45g | 0.92% |
| 25% Glutaraldehyde | 28.5g | 0.91% |

### A. Tensile strength test

Tensile strength of a triple network cooling hydrogel of formula as in Table 13 was measured in a ASTM D 5035 test and compared to that of a Normal hydrogel (PVA 1799 crosslinked with glutaraldehyde,, without PDMS or PCM, water content about 80-85%; obtained from Shanghai Chuangshi Medical technology (Group) Co., Ltd.).

### Specifications:

**Test equipment:** Instron
**Test method:** ASTM D 5035
**Thickness:** 5mm
**Length:**100cm

In the tensile strength test, loads (measured in N) on the hydrogel were varied and extension of the hydrogel measured (mm). Figure 6 depicts results of tensile strength test, showing test images (2^{nd} column), test graph (3^{rd} column), maximum load (4^{th} column), and extension at maximum load (5^{th} column). The triple network cooling hydrogel showed 6 times more tensile strength than the normal hydrogel (33.73 N for the triple network cooling hydrogel vs. 5.62N for the normal hydrogel). The triple network cooling hydrogel showed 25 times more elongation at maximum load at tensile break than the normal hydrogel (129mm for the triple network cooling hydrogel vs. 5.02mm for the normal hydrogel).

### B. Compression test

Compression of a triple network cooling hydrogel of formula as in Table 13 was measured in a ISO 3386-1 test and compared to that of a Normal hydrogel: (PVA 1799 crosslinked with glutaraldehyde,, without PDMS or PCM, water content about 80-85%; obtained from Shanghai Chuangshi Medical technology (Group) Co., Ltd.).

### Specifications

**Test equipment:** Instron
**Test method:** ISO 3386-1
**Thickness:** 25mm

In the compression test, loads (measured in N) on the hydrogel were varied and extension of the hydrogel measured (mm). Figure 7 depicts results of compression test, showing test images (2^{nd} column), test graph (3^{rd} column), load (N) at extension 17 mm (4^{th} column), and shape stability (5^{th} column). The triple network cooling hydrogel is 10 times as compressive at extension 17mm than the normal hydrogel (2850N for the triple network cooling hydrogel vs. 285N for the normal hydrogel). The triple network cooling hydrogel recovered to original shape 100% after compression of 2850N,with the diameter kept as original 8.3cm, while the normal hydrogel deformed after the compression of 285N, with the diameter deformed from 8.0cm to 13.3cm.

### Example 7: Cooling period tests

As a measure of cooling period, hydrogels were exposed to simulated solar radiation and temperature measured.

### Specifications:

**Test equipment:** ATLAS Ci3000+ Xenon Weather Ometer; MSR 147WD series Data Loggers and Recorders.
**Test conditions:** Environment Temperature: 37°C± 3 °C simulated solar radiation irradiance: 1120 ± 47 W/m² (maximum irradiance at noon all over the world - GJB150.7a)
**Exposure cycle duration:** 60min exposure + 30min dark
**Test Method:** Pack and seal the same weight(100g) of normal hydrogel and triple network cooling hydrogel with the same reflective film, expose the sealed padding in the Xenon weather ometer chamber at the same radiation and the same cycle duration.

Figures 8A-C shows the equipment used in/for the tests: exterior of the ATLAS Ci3000+ Xenon Weather Ometer (Figure 8A, left), chamber of the ATLAS Ci3000+ Xenon Weather Ometer (Figure 8B, center), and MSR 147WD to record the real time temperature of the hydrogel padding (Figure 8C, right).

### A. Temperature change of hydrogel with or without PCM under solar radiation.

A PVA/PCM hydrogel (dashed curve) was compared to a PVA hydrogel [no PCM] (dotted curve) in Figure 8D. Air is depicted in solid curve.

**Table 14: Dashed curve formula: PVA/PCM-28 hydrogel**

| **Component** | **weight** |
|---|---|
| PVA 1799 | 12g |
| PCM 28 particle | 83g |
| water | 200g |
| 25% glutaraldehyde | 20g |

**Table 15: Dotted curve formula: PVA hydrogel [No PCM]**

| **Component** | **weight** |
|---|---|
| PVA 1799 | 12g |
| water | 200g |
| 25% glutaraldehyde | 13g |

### Conclusion:

The formula with PCM 28°C hydrogel has a lower temperature during the 1 hour radiation than the formula without PCM hydrogel. The maximum temperature difference is around 6°C at 25minutes. The PCM in the formula in Table 14 (dashed curve) gives the hydrogel better cooling function than the formula that does not contain PCM (formula in Table 15, dotted curve).

### B. Temperature change of hydrogel with different formula (0302, 0303, and 0224C) under solar radiation.

Three hydrogels were compared in Figure 8E: a PVA/PDMS/PCM-42, 45, 32, 37, 28, 52, hydrogel (0224C formula, dashed curve), a PVA/PDMS/PCM-32, 37 hydrogel (0303 formula, dot-dashed curve), and a PVA/PDMS [no PCM] (0302 formula, dotted curve). Air is depicted in solid curve.

**Table 16: 0224C curve formula**

| Component | weight | % by Weight (total 804.5 g) |
|---|---|---|
| PVA 1799 | 50g | 6.2% |
| water | 462.5g | 57% |
| PCM 42 particle | 30g | Total PCM 22% |
| PCM 45 particle | 30g | |
| PCM 32 particle | 30g | |
| PCM 37 particle | 30g | |
| PCM 28 particle | 30g | |
| PCM 52 particle | 30g | |
| PDMS Dow Corning 184(10:1) | 44g (10:1) | 5.5% |
| 25% glutaraldehyde | 68g | 2.1% |

**Table 17: 0303curve formula**

| Component | weight | % by Weight (total 223 g) |
|---|---|---|
| PVA 1799 | 15g | 6.7% |
| water | 142g | 64% |
| PCM 32 particle | 20g | Total PCM 18% |
| PCM 37 particle | 20g | |
| PDMS Dow Corning 184(10:1) | 11g (10:1) | 4.9% |
| 25% glutaraldehyde | 15g | 1.7% |

**Table 18: 0302curve formula**

| Component | weight |
|---|---|
| PVA 1799 | 15g |
| water | 142g |
| Dow Corning 184(10:1) | 11g |
| 25% glutaraldehyde | 10g |

### Conclusion:

Formula 0224C with PCM 42/45/32/37/28/52°C hydrogel (Table 16; dashed curve) has a lower temperature during the 1 hour radiation than either the 0302 formula with no PCM (Table 18, dotted curve) and the 0303 formula with PCM-32, 37 hydrogel (Table 17; dot-dashed curve). The maximum temperature difference is around 4°C at 35 minutes between formulas 0224C and 0302. Comparing the 0224C and 0303 formulas, the multi-component formula with a wider range of phase change capsules and higher proportion PCM (0224C formula) has the better cooling performance. The triple network cooling hydrogel (0224C formula) compared with 0302 formula without PCM in the system has significant temperature difference during the 1 hour radiation period.

## Claims

1. A triple crosslinked cooling hydrogel composition comprising:
polyvinyl alcohol (PVA), wherein a percentage by weight of the PVA is in a range of about 4-8%;
polydimethylsiloxane (PDMS), wherein a percentage by weight of the PDMS is in a range of about 4-8 %;
phase change material (PCM), wherein a percentage by weight of the PCM is in a range of about 15-25 %;
water, wherein a percentage by weight of the water is in a range of about 55-68%;
crosslinker, wherein a percentage by weight of the crosslinker is in a range of about 0.5-2.5%;
a first crosslinked single network PVA hydrogel, wherein molecular chains of the PVA are crosslinked by hydrogen bonds;
a double network PVA + PDMS hydrogel, wherein microspheres of the PDMS are crosslinked with long chain molecules of the PVA by van der Waals interactions;
a triple network PVA + PDMS + PCM hydrogel, wherein capsule particles of the PCM are embedded into the double network PVA + PDMS hydrogel and act as a third crosslinking agent; and
optionally wherein the PVA is PVA 1799, further optionally wherein the crosslinker is glutaraldehyde, further optionally comprising vanillic acid.

2. The triple crosslinked cooling hydrogel composition of claim 1, wherein the PCM is/comprises at least one of PCM 28, PCM 32, PCM 37, PCM 42, PCM 45, and PCM 52;
the PCM comprises at least two of PCM 28, PCM 32, PCM 37, PCM 42, PCM 45, and PCM 52;
the PCM comprises at least three of PCM 28, PCM 32, PCM 37, PCM 42, PCM 45, and PCM 52;
the PCM comprises at least four of PCM 28, PCM 32, PCM 37, PCM 42, PCM 45, and PCM 52;
the PCM comprises at least five of PCM 28, PCM 32, PCM 37, PCM 42, PCM 45, and PCM 52; or
the PCM comprises PCM 28, PCM 32, PCM 37, PCM 42, PCM 45, and PCM 52.

3. The triple crosslinked cooling hydrogel composition of claim 1, comprising about 6.1% PVA 1799, about 57% w/w water, about 22% w/w PCM, about 5.4% w/w PDMS, about 0.87% w/w glutaraldehyde, and about 0.89% w/w vanillic acid, optionally wherein the PCM comprises PCM 28, PCM 32, PCM 37, PCM 42, PCM 45, and PCM 52.

4. The triple crosslinked cooling hydrogel composition of claim 1, comprising about 6.4% w/w PVA 1799, about 58% w/w water, about 21% w/w PCM, about 5.8% w/w PDMS, about 0.99% w/w glutaraldehyde, and about 0.68% w/w vanillic acid, optionally wherein the PCM comprises PCM 28 and PCM 32.

5. The triple crosslinked cooling hydrogel composition of claim 1, comprising about 4.8% w/w PVA 1799, about 63% w/w water, about 19% w/w PCM, about 5.3% w/w PDMS, about 0.72% w/w glutaraldehyde, and about 0.85% w/w vanillic acid, optionally wherein the PCM comprises PCM 28, PCM 32, PCM 42, and PCM 52.

6. The triple crosslinked cooling hydrogel composition of claim 1, comprising about 6.4% w/w PVA 1799, about 59% w/w water, about 19% w/w PCM, about 5.6% w/w PDMS, about 0.91% w/w glutaraldehyde, and about 0.92% w/w vanillic acid, optionally wherein the PCM comprises PCM 28, PCM 32, PCM 37, PCM 42, and PCM 52.

7. The triple crosslinked cooling hydrogel composition of claim 1, comprising about 6.2% w/w PVA 1799, about 57% w/w water, about 22% w/w PCM, about 5.5% w/w PDMS, and about 2.1% w/w glutaraldehyde, optionally wherein the PCM comprises PCM 28, PCM 32, PCM 37, PCM 42, PCM 45, and PCM 52.

8. The triple crosslinked cooling hydrogel composition of claim 1, comprising about 6.7% w/w PVA 1799, about 64% w/w water, about 18% w/w PCM, about 4.9% w/w PDMS, and about 1.7% w/w glutaraldehyde, optionally wherein the PCM comprises PCM 32 and PCM 37.

9. A method for making a triple crosslinked cooling hydrogel of claim 1, comprising
(a) adding PVA to water at about 95°C and performing stirring to produce a first crosslinked single network PVA hydrogel;
(b) adding PDMS and a first curing agent to the first crosslinked single network PVA hydrogel at about 30°C and performing stirring, to produce a double network PVA + PDMS hydrogel;
(c) increasing the temperature of the double network PVA + PDMS hydrogel to about 95°C at the rate of about 2°C/minute and performing stirring to produce a double network PVA + solidified PDMS hydrogel;
(d) decreasing the temperature of the double network PVA + solidified PDMS hydrogel to about 85 °C and adding PCM while stirring to produce a triple network PVA + PDMS + PCM hydrogel;
(e) adding a crosslinking agent to the triple network PVA + PDMS + PCM hydrogel at about 85 °C to produce a stable triple network PVA + PDMS + PCM hydrogel; and
(f) cooling the stable triple network PVA + PDMS + PCM hydrogel to room temperature to produce the triple network cooling hydrogel;
optionally wherein the PCM is a PCM particle emulsion prepared by mixing PCM microcapsules and water, further optionally wherein the PVA is PVA 1799.

10. The method of claim 9, further comprising adding a second curing agent to the triple network PVA + PDMS + PCM hydrogel in step(e), optionally wherein the second curing agent is vanillic acid.

11. The method of any one of claims 9-10, wherein the first curing agent is pre-mixed with the PDMS.

12. The method of any one of claims 9-11, wherein the crosslinking agent is glutaraldehyde.

13. The method of any one of claims 9-12, wherein
the PCM is/comprises at least one of PCM 28, PCM 32, PCM 37, PCM 42, PCM 45, and PCM 52;
the PCM comprises at least two of PCM 28, PCM 32, PCM 37, PCM 42, PCM 45, and PCM 52;
the PCM comprises at least three of PCM 28, PCM 32, PCM 37, PCM 42, PCM 45, and PCM 52;
the PCM comprises at least four of PCM 28, PCM 32, PCM 37, PCM 42, PCM 45, and PCM 52;
the PCM comprises at least five of PCM 28, PCM 32, PCM 37, PCM 42, PCM 45, and PCM 52; or
the PCM comprises PCM 28, PCM 32, PCM 37, PCM 42, PCM 45, and PCM 52.

14. An article of clothing comprising the triple network cooling hydrogel of any one of claims 1-8.

15. The article of clothing of claim 14, wherein the article of clothing is a safety harness, optionally wherein the safety harness comprises a padding, further optionally wherein the padding comprises the triple network cooling hydrogel.

## Patentansprüche

1. Dreifach vernetzte Kühlhydrogelzusammensetzung, umfassend:
Polyvinylalkohol (PVA), wobei ein Gewichtsanteil des PVA in einem Bereich von etwa 4-8 % liegt;
Polydimethylsiloxan (PDMS), wobei ein Gewichtsanteil des PDMS in einem Bereich von etwa 4-8 % liegt;
Phasenwechselmaterial (PCM), wobei ein Gewichtsanteil des PCM in einem Bereich von etwa 15-25 % liegt;
Wasser, wobei ein Gewichtsanteil des Wassers in einem Bereich von etwa 55-68 % liegt;
Vernetzer, wobei ein Gewichtsanteil des Vernetzers in einem Bereich von etwa 0,5-2,5 % liegt;
ein erstes vernetztes PVA-Einfachnetzwerk-Hydrogel, bei dem Molekülketten des PVA durch Wasserstoffbrückenbindungen vernetzt sind;
ein Doppelnetzwerk-Hydrogel aus PVA und PDMS, bei dem Mikrokügelchen des PDMS durch Van-der-Waals-Wechselwirkungen mit langkettigen Molekülen des PVA vernetzt sind;
ein Dreifachnetzwerk-Hydrogel aus PVA, PDMS und PCM, bei dem Kapselpartikel des PCM in das Doppelnetzwerk-Hydrogel aus PVA und PDMS eingebettet sind und als drittes Vernetzungsmittel fungieren; und
wobei es sich bei dem PVA gegebenenfalls um PVA 1799 handelt, wobei der Vernetzer ferner gegebenenfalls Glutaraldehyd ist, ferner gegebenenfalls umfassend Vanillinsäure.

2. Dreifach vernetzte Kühlhydrogelzusammensetzung nach Anspruch 1, wobei
das PCM mindestens eines von PCM 28, PCM 32, PCM 37, PCM 42, PCM 45 und PCM 52 ist/umfasst;
das PCM mindestens zwei von PCM 28, PCM 32, PCM 37, PCM 42, PCM 45 und PCM 52 umfasst;
das PCM mindestens drei von PCM 28, PCM 32, PCM 37, PCM 42, PCM 45 und PCM 52 umfasst;
das PCM mindestens vier von PCM 28, PCM 32, PCM 37, PCM 42, PCM 45 und PCM 52 umfasst;
das PCM mindestens fünf von PCM 28, PCM 32, PCM 37, PCM 42, PCM 45 und PCM 52 umfasst; oder
das PCM PCM 28, PCM 32, PCM 37, PCM 42, PCM 45 und PCM 52 umfasst.

3. Dreifach vernetzte Kühlhydrogelzusammensetzung nach Anspruch 1, umfassend etwa 6,1 % PVA 1799, etwa 57 Gew.-% Wasser, etwa 22 Gew.-% PCM, etwa 5,4 Gew.-% PDMS, etwa 0,87 Gew.-% Glutaraldehyd und etwa 0,89 Gew.-% Vanillinsäure, wobei das PCM gegebenenfalls PCM 28, PCM 32, PCM 37, PCM 42, PCM 45 und PCM 52 umfasst.

4. Dreifach vernetzte Kühlhydrogelzusammensetzung nach Anspruch 1, umfassend etwa 6,4 Gew.-% PVA 1799, etwa 58 Gew.-% Wasser, etwa 21 Gew.-% PCM, etwa 5,8 Gew.-% PDMS, etwa 0,99 Gew.-% Glutaraldehyd und etwa 0,68 Gew.-% Vanillinsäure, wobei das PCM gegebenenfalls PCM 28 und PCM 32 umfasst.

5. Dreifach vernetzte Kühlhydrogelzusammensetzung nach Anspruch 1, umfassend etwa 4,8 Gew.-% PVA 1799, etwa 63 Gew.-% Wasser, etwa 19 Gew.-% PCM, etwa 5,3 Gew.-% PDMS, etwa 0,72 Gew.-% Glutaraldehyd und etwa 0,85 Gew.-% Vanillinsäure, wobei das PCM gegebenenfalls PCM 28, PCM 32, PCM 42 und PCM 52 umfasst.

6. Dreifach vernetzte Kühlhydrogelzusammensetzung nach Anspruch 1, umfassend etwa 6,4 Gew.-% PVA 1799, etwa 59 Gew.-% Wasser, etwa 19 Gew.-% PCM, etwa 5,6 Gew.-% PDMS, etwa 0,91 Gew.-% Glutaraldehyd und etwa 0,92 Gew.-% Vanillinsäure, wobei das PCM gegebenenfalls PCM 28, PCM 32, PCM 37, PCM 42 und PCM 52 umfasst.

7. Dreifach vernetzte Kühlhydrogelzusammensetzung nach Anspruch 1, umfassend etwa 6,2 Gew.-% PVA 1799, etwa 57 Gew.-% Wasser, etwa 22 Gew.-% PCM, etwa 5,5 Gew.-% PDMS und etwa 2,1 Gew.-% Glutaraldehyd, wobei das PCM gegebenenfalls PCM 28, PCM 32, PCM 37, PCM 42, PCM 45 und PCM 52 umfasst.

8. Dreifach vernetzte Kühlhydrogelzusammensetzung nach Anspruch 1, umfassend etwa 6,7 Gew.-% PVA 1799, etwa 64 Gew.-% Wasser, etwa 18 Gew.-% PCM, etwa 4,9 Gew.-% PDMS und etwa 1,7 Gew.-% Glutaraldehyd, wobei das PCM gegebenenfalls PCM 32 und PCM 37 umfasst.

9. Verfahren zur Herstellung eines dreifach vernetzten Kühlhydrogels nach Anspruch 1, umfassend
(a) Zugeben von PVA zu Wasser bei etwa 95 °C und Rühren, um ein erstes vernetztes PVA-Einfachnetzwerk-Hydrogel herzustellen;
(b) Zugeben von PDMS und einem ersten Härter zu dem ersten vernetzten PVA-Einfachnetzwerk-Hydrogel bei etwa 30 °C und Rühren, um ein Doppelnetzwerk-Hydrogel aus PVA und PDMS herzustellen;
(c) Erhöhen der Temperatur des Doppelnetzwerk-Hydrogels aus PVA und PDMS auf etwa 95 °C mit einer Geschwindigkeit von etwa 2 °C/Minute und Rühren, um ein Doppelnetzwerk-Hydrogel aus PVA und verfestigtem PDMS herzustellen;
(d) Senken der Temperatur des Doppelnetzwerk-Hydrogels aus PVA und verfestigtem PDMS auf etwa 85 °C und Zugeben von PCM unter Rühren, um ein Dreifachnetzwerk-Hydrogel aus PVA, PDMS und PCM herzustellen;
(e) Zugeben eines Vernetzungsmittels zu dem Dreifachnetzwerk-Hydrogel aus PVA, PDMS und PCM bei etwa 85 °C, um ein stabiles Dreifachnetzwerk-Hydrogel aus PVA, PDMS und PCM herzustellen; und
(f) Abkühlen des stabilen Dreifachnetzwerk-Hydrogels aus PVA, PDMS und PCM auf Raumtemperatur, um das Dreifachnetzwerk-Kühlhydrogel herzustellen;
wobei es sich bei dem PCM gegebenenfalls um eine PCM-Partikelemulsion handelt, die durch Mischen von PCM-Mikrokapseln mit Wasser hergestellt wird, wobei es sich bei dem PVA ferner gegebenenfalls um PVA 1799 handelt.

10. Verfahren nach Anspruch 9, ferner umfassend das Zugeben eines zweiten Härters zu dem Dreifachnetzwerk-Hydrogel aus PVA, PDMS und PCM in Schritt (e), wobei es sich bei dem zweiten Härter gegebenenfalls um Vanillinsäure handelt.

11. Verfahren nach einem der Ansprüche 9-10, wobei der erste Härter mit dem PDMS vorgemischt ist.

12. Verfahren nach einem der Ansprüche 9-11, wobei es sich bei dem Vernetzungsmittel um Glutaraldehyd handelt.

13. Verfahren nach einem der Ansprüche 9-12, wobei das PCM mindestens eines von PCM 28, PCM 32, PCM 37, PCM 42, PCM 45 und PCM 52 ist/umfasst;
das PCM mindestens zwei von PCM 28, PCM 32, PCM 37, PCM 42, PCM 45 und PCM 52 umfasst;
das PCM mindestens drei von PCM 28, PCM 32, PCM 37, PCM 42, PCM 45 und PCM 52 umfasst;
das PCM mindestens vier von PCM 28, PCM 32, PCM 37, PCM 42, PCM 45 und PCM 52 umfasst;
das PCM mindestens fünf von PCM 28, PCM 32, PCM 37, PCM 42, PCM 45 und PCM 52 umfasst; oder
das PCM PCM 28, PCM 32, PCM 37, PCM 42, PCM 45 und PCM 52 umfasst.

14. Kleidungsstück, umfassend das Dreifachnetzwerk-Kühlhydrogel nach einem der Ansprüche 1-8.

15. Kleidungsstück nach Anspruch 14, wobei es sich bei dem Kleidungsstück um einen Sicherheitsgurt handelt, wobei der Sicherheitsgurt gegebenenfalls eine Polsterung umfasst, wobei die Polsterung ferner gegebenenfalls das Dreifachnetzwerk-Kühlhydrogel umfasst.

## Revendications

1. Composition d'hydrogel de refroidissement à triple réticulation comprenant :
de l'alcool polyvinylique (PVA), dans laquelle le pourcentage en poids du PVA se situe dans une plage d'environ 4 à 8 % ;
du polydiméthylsiloxane (PDMS), dans laquelle le pourcentage en poids du PDMS se situe dans une plage d'environ 4 à 8 % ;
un matériau à changement de phase (PCM), dans laquelle le pourcentage en poids du PCM se situe dans une plage d'environ 15 à 25 % ;
de l'eau, dans laquelle le pourcentage en poids de l'eau se situe dans une plage d'environ 55 à 68 % ;
un agent réticulant, dans laquelle le pourcentage en poids de l'agent réticulant se situe dans une plage d'environ 0,5 à 2,5 % ;
un premier hydrogel de PVA à réseau unique réticulé, dans laquelle les chaînes moléculaires du PVA sont réticulées par des liaisons hydrogène ;
un hydrogel à double réseau de PVA + PDMS, dans laquelle les microsphères de PDMS sont réticulées avec des molécules à longue chaîne de PVA par des interactions de van der Waals ;
un hydrogel à triple réseau de PVA + PDMS + PCM, dans laquelle les particules encapsulées du PCM sont incorporées dans l'hydrogel à double réseau de PVA + PDMS et agissent comme un troisième agent réticulant ; et
éventuellement dans laquelle le PVA est du PVA 1799, éventuellement en outre dans laquelle l'agent réticulant est du glutaraldéhyde, et éventuellement en outre comprenant de l'acide vanillique.

2. Composition d'hydrogel de refroidissement à triple réticulation selon la revendication 1, dans laquelle le PCM est/comprend au moins l'un des éléments suivants :
PCM 28, PCM 32, PCM 37, PCM 42, PCM 45 et PCM 52 ;
le PCM comprend au moins deux parmi le PCM 28, PCM 32, PCM 37, PCM 42, PCM 45 et PCM 52 ;
le PCM comprend au moins trois parmi le PCM 28, PCM 32, PCM 37, PCM 42, PCM 45 et PCM 52 ;
le PCM comprend au moins quatre parmi le PCM 28, PCM 32, PCM 37, PCM 42, PCM 45 et PCM 52 ;
le PCM comprend au moins cinq parmi le PCM 28, PCM 32, PCM 37, PCM 42, PCM 45 et PCM 52 ; ou
le PCM comprend le PCM 28, PCM 32, PCM 37, PCM 42, PCM 45 et PCM 52.

3. Composition d'hydrogel de refroidissement à triple réticulation selon la revendication 1, comprenant environ 6,1 % de PVA 1799, environ 57 % p/p d'eau, environ 22 % p/p de PCM, environ 5,4 % p/p de PDMS, environ 0,87 % p/p de glutaraldéhyde et environ 0,89 % p/p d'acide vanillique, éventuellement dans laquelle le PCM comprend le PCM 28, le PCM 32, le PCM 37, le PCM 42, le PCM 45 et le PCM 52.

4. Composition d'hydrogel de refroidissement à triple réticulation selon la revendication 1, comprenant environ 6,4 % p/p de PVA 1799, environ 58 % p/p d'eau, environ 21 % p/p de PCM, environ 5,8 % p/p de PDMS, environ 0,99 % p/p de glutaraldéhyde et environ 0,68 % p/p d'acide vanillique, éventuellement dans laquelle le PCM comprend le PCM 28 et le PCM 32.

5. Composition d'hydrogel de refroidissement à triple réticulation selon la revendication 1, comprenant environ 4,8 % p/p de PVA 1799, environ 63 % p/p d'eau, environ 19 % p/p de PCM, environ 5,3 % p/p de PDMS, environ 0,72 % p/p de glutaraldéhyde et environ 0,85 % p/p d'acide vanillique, éventuellement dans laquelle le PCM comprend le PCM 28, le PCM 32, le PCM 42 et le PCM 52.

6. Composition d'hydrogel de refroidissement à triple réticulation selon la revendication 1, comprenant environ 6,4 % p/p de PVA 1799, environ 59 % p/p d'eau, environ 19 % p/p de PCM, environ 5,6 % p/p de PDMS, environ 0,91 % p/p de glutaraldéhyde et environ 0,92 % p/p d'acide vanillique, éventuellement dans laquelle le PCM comprend le PCM 28, PCM 32, le PCM 37, le PCM 42 et le PCM 52.

7. Composition d'hydrogel de refroidissement à triple réticulation selon la revendication 1, comprenant environ 6,2 % p/p de PVA 1799, environ 57 % p/p d'eau, environ 22 % p/p de PCM, environ 5,5 % p/p de PDMS et environ 2,1 % p/p de glutaraldéhyde, éventuellement dans laquelle le PCM comprend le PCM 28, le PCM 32, le PCM 37, le PCM 42, le PCM 45 et le PCM 52.

8. Composition d'hydrogel de refroidissement à triple réticulation selon la revendication 1, comprenant environ 6,7 % p/p de PVA 1799, environ 64 % p/p d'eau, environ 18 % p/p de PCM, environ 4,9 % p/p de PDMS et environ 1,7 % p/p de glutaraldéhyde, éventuellement dans laquelle le PCM comprend le PCM 32 et le PCM 37.

9. Procédé de fabrication d'un hydrogel de refroidissement à triple réticulation selon la revendication 1, comprenant
(a) l'ajout du PVA à de l'eau à environ 95 °C et la réalisation d'une agitation pour produire un premier hydrogel de PVA à réseau unique réticulé ;
(b) l'ajout du PDMS et d'un premier agent de durcissement au premier hydrogel de PVA à réseau unique réticulé à environ 30 °C et la réalisation d'une agitation pour produire un hydrogel à double réseau de PVA + PDMS ;
(c) l'augmentation de la température de l'hydrogel à double réseau de PVA + PDMS à environ 95 °C à la vitesse d'environ 2 °C/minute et la réalisation d'une agitation pour produire un hydrogel à double réseau de PVA + PDMS solidifié ;
(d) la réduction de la température de l'hydrogel à double réseau de PVA + PDMS solidifié à environ 85 °C et l'ajout du PCM tout en agitant pour produire un hydrogel à triple réseau de PVA + PDMS + PCM ;
(e) l'ajout d'un agent réticulant à l'hydrogel à triple réseau PVA + PDMS + PCM à environ 85 °C pour produire un hydrogel à triple réseau PVA + PDMS + PCM stable ; et
(f) le refroidissement de l'hydrogel stable à triple réseau PVA + PDMS + PCM à température ambiante pour produire l'hydrogel de refroidissement à triple réseau ;
éventuellement dans lequel le PCM est une émulsion de particules de PCM préparée en mélangeant des microcapsules de PCM et de l'eau, et éventuellement en outre dans lequel le PVA est du PVA 1799.

10. Procédé selon la revendication 9, comprenant en outre l'ajout d'un second agent de durcissement à l'hydrogel à triple réseau PVA + PDMS + PCM à l'étape (e), éventuellement dans lequel le second agent de durcissement est de l'acide vanillique.

11. Procédé selon l'une quelconque des revendications 9 à 10, dans lequel le premier agent de durcissement est prémélangé avec le PDMS.

12. Procédé selon l'une quelconque des revendications 9 à 11, dans lequel l'agent réticulant est du glutaraldéhyde.

13. Procédé selon l'une quelconque des revendications 9 à 12, dans lequel
le PCM est/comprend au moins l'un des éléments suivants : PCM 28, PCM 32, PCM 37, PCM 42, PCM 45 et PCM 52 ;
le PCM comprend au moins deux parmi le PCM 28, PCM 32, PCM 37, PCM 42, PCM 45 et PCM 52 ;
le PCM comprend au moins trois parmi le PCM 28, PCM 32, PCM 37, PCM 42, PCM 45 et PCM 52 ;
le PCM comprend au moins quatre parmi le PCM 28, PCM 32, PCM 37, PCM 42, PCM 45 et PCM 52 ;
le PCM comprend au moins cinq parmi le PCM 28, PCM 32, PCM 37, PCM 42, PCM 45 et PCM 52 ; ou
le PCM comprend le PCM 28, PCM 32, PCM 37, PCM 42, PCM 45 et PCM 52.

14. Article vestimentaire comprenant l'hydrogel de refroidissement à triple réseau selon l'une quelconque des revendications 1 à 8.

15. Article vestimentaire selon la revendication 14, dans lequel l'article vestimentaire est un harnais de sécurité, éventuellement dans lequel le harnais de sécurité comprend un rembourrage, éventuellement en outre dans lequel le rembourrage comprend l'hydrogel de refroidissement à triple réseau.
